# EUROPÄISCHE PATENTSCHRIFT

(11) **EP 0 421 068 B1**
(45) Veröffentlichungstag und Bekanntmachung des Hinweises auf die Patenterteilung: **25.08.1993**
(21) Anmeldenummer: 90114000.4
(22) Anmeldetag: 21.07.1990
(51) Int. Cl.: E21F 16/00, E02D 3/12

(54) **Verfahren zur Entfernung von wasserhaltigen Flüssigkeiten aus einem unterirdischen Hohlraum**
Method for removing water-retensive liquids from a subterranean hollow space
Procédé pour l'enlèvement de liquide aquifère d'un vide souterrain

(30) Priorität: 24.08.1989 DE 3927906
(43) Veröffentlichungstag der Anmeldung: 10.04.1991
(73) Patentinhaber: EWE Aktiengesellschaft, D-26015 Oldenburg (DE)
(72) Erfinder: Petersen, Harald, Dipl.-Ing., D-2900 Oldenburg (DE); Martens, Jürgen, Dipl.-Chem. Dipl.-Ing. Prof.Dr., D-2900 Oldenburg (DE); Harms, Werner, Dipl.-Ing., D-2900 Oldenburg (DE); Kramer, Uwe, Dipl.-Chem., D-2900 Oldenburg (DE)
(74) Vertreter: Jabbusch, Wolfgang, Dr.Jur. Jabbusch, Wehser & Lauerwald Patentanwälte

(56) Entgegenhaltungen:
- DD-A- 232 953
- DE-A- 3 422 330
- DE-C- 2 712 869
- US-A- 3 833 709
- US-A- 4 367 985

## Beschreibung

Die Erfindung betrifft ein Verfahren zur Entfernung von Wasser und wasserhaltigen Flüssigkeiten aus dem Sumpf eines unterirdischen Hohlraumes, insbesondere einer Kaverne (siehe DE-A1-3 422 330)

Unterirdische Hohlräume, z.B. in Salzstöcken angelegte Kavernen, lassen sich zur Lagerung großer Mengen von Gasen, Flüssigkeiten und anderen einzulagernden Substanzen verwenden.

Kavernen werden in einem Salzstock durch Aussolen hergestellt. Dabei wird fortlaufend Frischwasser durch eine Bohrung in den Salzstock gedrückt, in dem sich dann durch Auslösen der Salze und Ausspülen der entstandenen Sole der gewünschte Hohlraum ausbildet. Um das durch Aussolung entstandene Kavernenvolumen für die Lagerung/Speicherung nutzen zu können, wird nach Beendigung des Solbetriebs die Sole aus der Kaverne entfernt. Bei dem für Gaskavernen angewandten Verfahren verbleibt bei der Kavernen-Erstbefüllung mit Gas am Boden der Kaverne ein im wesentlichen aus der wasserhaltigen Salzlösung bestehender Sumpf, dessen Oberfläche und Volumen im wesentlichen von den geometrischen Abmessungen der Kaverne und von der Einbauteufe des Soleentleerungsstranges bestimmt ist.

Bei der Einlagerung eines gasförmigen Mediums, z.B. Erdgas, kommt das Gas mit der freien Oberfläche des Sumpfes in Kontakt und reichert sich mit Wasser bzw. Wasserdampf an. Bei der anschließenden Auslagerung des Gases kann es durch das Wasser bzw. den Wasserdampfgehalt des Gases zu Hydratbildung in einer vom Hohlraum zur Erdoberfläche führenden Bohrung oder im sich anschließenden Gasverteilungsnetz kommen. Um dieses zu verhindern, muß die Entnahmerate verringert werden, um die bei der Entspannung des Gases durch den Joule-Thomson-Effekt auftretende Abkühlung soweit zu vermeiden, daß der Wasserdampftaupunkt nicht unterschritten wird. Dieses ist unerwünscht, da das Speichergas vor allem zur Deckung des Spitzenbedarfs in kurzen Zeiträumen mit großen Raten benötigt wird. In jedem Fall muß das aus Kavernen ausgelagerte Gas vor Einleitung in das Gasverteilungsnetz, das dem Transport des Gases zu den Verbrauchern dient, in einem technisch aufwendigen Verfahren getrocknet werden.

Desweiteren kann die Qualität des gespeicherten Gases durch die aufgenommene Feuchtigkeit beeinträchtigt werden. So ist z.B. das Auftreten erhöhten Schwefelwasserstoffgehaltes in Erdgasen nach der Entnahme aus Kavernen auf die Hydrolyse von Kohlenoxidsulfid, das in vielen Erdgasen angetroffen wird, zurückzuführen.

Um den Aufwand für derartige Trocknungsprozesse zu verringern, ist bereits versucht worden, die Anreicherung des in der Kaverne eingelagerten gasförmigen Mediums, z.B. Erdgas, mit Wasser oder Wasserdampf dadurch zu vermeiden, daß der Sumpf in der Kaverne eine Abdeckung erhält, die den Stofftransport vom Wasser aus dem Sumpf in das eingelagerte Gas hemmt oder möglichst ganz verhindert.

Ein Nachteil der Verwendung von Abdeckschichten im festen Aggregatzustand liegt darin, daß wegen des Fehlens selbstheilender Eigenschaften die Absperrwirkung durch Rißbildung oder Zerstörung, beipsielsweise durch aus den Wandungen der Kaverne oder des Hohlraumes sich losende und herabfallende Gesteins- oder Salzbrocken aufgehoben wird.

Flüssige oder plastische Abdeckschichten weisen zwar selbstheilende Eigenschaften auf, sind jedoch nicht geeignet, die Einstellung der thermodynamischen Gleichgewichtes in einem unterirdischen Hohlraum zu verhindern. Solche Abdeckschichten können allenfalls eine Verlangsamung der Diffusion von Wasser aus dem Sumpf in das im Hohlraum lagernde Medium bewirken, jedoch nicht völlig verhindern.

Der Erfindung liegt die Aufgabe zugrunde, ein Verfahren zu finden, mit welchem Wasser oder wasserhaltige Flüssigkeiten aus dem Sumpf eines unterirdischen Hohlraumes entfernt werden können.

Diese Aufgabe ist erfindungsgemäß dadurch gelöst, daß dem Sumpf eine wassermischbare organische Flüssigkeit zugesetzt wird und daß das dadurch gebildete Gemisch aus dem Hohlraum abgeführt wird.

Durch den Zusatz von wassermischbarer organischer Flüssigkeit steigt die freie Oberfläche des Sumpfes (der sog. Spiegel) im Hohlraum soweit an, daß wieder eine Entfernung von Sumpfflüssigkeit (z.B. durch Verdrängung mit Gas) möglich wird. Die in der Kaverne verbliebenen Reste an Wasser oder wasserhaltigen Flüssigkeiten werden also mit der organischen, mit Wasser mischbaren Flüssigkeit verdünnt. Das wasserhaltige Gemisch wird aus dem Hohlraum bzw. der Kaverne entfernt. Durch ständige Verdünnung und Entfernen der Mischung kann der Wassergehalt in unterirdischen Hohlräumen somit beliebig verringert werden.

Das Verfahren kann absatzweise durchgeführt werden, indem zunächst wassermischbare organische Flüssigkeit zugesetzt wird und danach das entstandene Gemisch abgeführt wird. Dieses Zusetzen und anschließende Abführen kann dann mehrfach wieder holt werden, bis die gewünschte Entwässerung des Kavernensumpfes erfolgt ist.

Das erfindungsgemäße Verfahren kann jedoch auch kontinuierlich durchgeführt werden, indem während des Zusetzens der wassermischbaren organischen Flüssigkeit auch gleichzeitig das entstandene Gemisch abgeführt wird. So kann z.B. zum Ende einer Erstbefüllung von Gaskavernen, bei der die Sole über einen bis kurz über den Kavernenboden eingebauten Soleentleerungsstrang mit Gas verdrängt wird, kontinuierlich die wassermischbare organische Flüssigkeit, z.B. durch direktes Einbringen in den Hohlraum, zugesetzt und das Gemisch abgezogen werden. Der Soleentleerungsstrang kann aber auch zum Zusetzen der organischen Flüssigkeit benutzt werden. Durch erneutes Einpressen von Gas kann das Gemisch dann beliebig oft wieder ausgefördert werden.

Nach einer bevorzugten Weiterbildung der Erfindung wird das Wasser aus dem abgeführten Gemisch entfernt und der verbleibende Gemischanteil dem Sumpf, bzw. dem noch im Sumpf verbliebenen Gemisch, wieder zugesetzt. Das mit Wasser beladene abgeführte Gemisch kann nach herkömmlichen Verfahren, z.B. durch Destillation, vom Wasser befreit und wieder verwendbar gemacht werden. Dadurch wird bei wiederholtem oder fortlaufenden Zusetzen und Abführen immer mehr Wasser dem Sumpf entzogen. Das Wasser im Sumpf wird dabei letztlich durch die wassermischbare organische Flüssigkeit vollständig ersetzt. Mit der freien Oberfläche des nur noch organische Flüssigkeit, jedoch kein Wasser enthaltenden Sumpfes in Kontakt kommendes eingelagertes Gas bedarf dann bei einer eventuellen Auslagerung nicht mehr der Trocknung durch aufwendige Trocknungsverfahren.

Als wassermischbare organische Flüssigkeiten kommen vor allem solche Mittel in Frage, die eine oder mehrere Hydroxylgruppen enthalten, insbesondere Alkohole. Es können einwertige oder mehrwertige Alkohole verwendet werden, auch Mischungen aus Alkoholen sind geeignet. Bevorzugt werden Ethylenglykol, Diethylenglykol, Triethylenglykol, Tetraethylenglykol, Pentaethylenglykol sowie die höheren flüssigen Polyethylenglykole im Molekulargewichtsbereich zwischen 200 und 600 Dalton, Glycerin und Methanol sowie deren Mischungen.

Besonders bevorzugt unter den mehrwertigen Alkoholen sind Diethylenglykol, Triethylenglykol und Glycerin sowie deren Mischungen in beliebigem Verhältnis.

Bevorzugte einwertige Alkohole sind Methanol, Ethanol und Isopropanol.

Bei der Verwendung solcher einwertiger Alkohole ergibt sich auch noch als Vorteil, daß nach dem vollständigen Ersetzen des Wassers im Sumpf durch den jeweiligen Alkohol, letzterer durch das Auslagern von Gas in kurzer Zeit durch den Übergang in die Gasphase vollständig aus dem Hohlraum entfernt wird. Dadurch erhält man einen völlig trockenen, von jeglicher Flüssigkeit freien unterirdischen Hohlraum, der vor allem für die Lagerung von Sonderabfällen von technischem Interesse ist.

Der nach und nach in die Gasphase übergehende einwertige Alkohol erhöht das verkaufsfähige Gasvolumen. Ferner wird durch die Reduzierung des flüssigen Sumpfvolumens das für die Gasspeicherung nutzbare geometrische Kavernenvolumen erhöht.

Desweiteren hat die Verwendung eines einwertigen Alkohols wie Methanol den Vorteil, daß seine Gasphase im ausgelagerten Gas enthalten ist und dadurch den Taupunkt des Gases so verändert, daß bei einer Entspannung des Gases die auftretende Vereisung und Hydratbildung von Rohrleitungen und Armaturen im Speicherbetrieb und im nachgeschalteten Gas-Verteilungsnetz verhindert wird.

Die Anwendung des erfindungsgemäßen Verfahrens ist nicht auf Kavernen in Salzstöcken beschränkt, sondern kann bei allen in sich geschlossenen unterirdischen Hohlräumen angewendet werden, die einen wasserhaltigen Sumpf aufweisen.

## Patentansprüche

1. Verfahren zur Entfernung von Wasser und wasserhaltigen Flüssigkeiten aus dem Sumpf eines unterirdischen Hohlraumes, insbesondere einer Kaverne,
dadurch gekennzeichnet,
daß dem Sumpf eine wassermischbare organische Flüssigkeit zugesetzt wird und daß das dadurch gebildete Gemisch aus dem Hohlraum abgeführt wird.

2. Verfahren nach Anspruch 1, dadurch gekennzeichnet, daß zunächst wassermischbare organische Flüssigkeit zugesetzt wird und danach das entstandene Gemisch abgeführt wird.

3. Verfahren nach Anspruch 2, dadurch gekennzeichnet, daß Zusetzen und anschließendes Abführen mehrfach wiederholt wird.

4. Verfahren nach Anspruch 1, dadurch gekennzeichnet, daß während des Zusetzens der wassermischbaren organischen Flüssigkeit auch gleichzeitig das entstandene Gemisch abgeführt wird.

5. Verfahren nach Anspruch 1 und einem der Ansprüche 2 oder 4, dadurch gekennzeichnet, daß das Wasser aus dem abgeführten Gemisch entfernt wird und daß der verbleibende Gemischanteil dem Sumpf bzw. dem noch im Sumpf verbliebenen Gemisch wieder zugesetzt wird.

6. Verfahren nach einem der vorhergehenden Ansprüche, dadurch gekennzeichnet, daß als wassermischbare organische Flüssigkeit ein einwertiger Alkohol verwendet wird.

7. Verfahren nach einem der Ansprüche 1 bis 5, dadurch gekennzeichnet, daß als wassermischbare organische Flüssigkeit eine Mischung aus einwertigen Alkoholen verwendet wird.

8. Verfahren nach einem der Ansprüche 1 bis 5, dadurch gekenn zeichnet, daß als wassermischbare organische Flüssigkeit ein mehrwertiger Alkohol verwendet wird.

9. Verfahren nach einem der Ansprüche 1 bis 5, dadurch gekennzeichnet, daß als wassermischbare organische Flüssigkeit eine Mischung aus mehrwertigen Alkoholen verwendet wird.

10. Verfahren nach einem der vorhergehenden Ansprüche, dadurch gekennzeichnet, daß als wassermischbare organische Flüssigkeit eine Mischung aus ein- oder mehrwertigen Alkoholen verwendet wird.

## Claims

1. A process for removing water and water-containing liquids from the sump of a subterranean cavity, in particular a cavern, **characterized in that** a water-miscible organic liquid is added to the sump, and the mixture formed thereby is removed from the cavity.

2. A process according to Claim 1, **characterized in that** water-miscible organic liquid is first added and the resulting mixture is then removed.

3. A process according to Claim 2, **characterized in that** the addition and the subsequent removal are repeated several times.

4. A process according to Claim 1, **characterized in that** during the addition of the water-miscible organic liquid the mixture formed Is also removed at the same time.

5. A process according to Claim 1 and one of Claims 2 or 3, **characterized in that** the water is extracted from the removed mixture, and the remaining portion of the mixture is added again to the sump or to the mixture still remaining in the sump.

6. A process according to one of the preceding Claims, **characterized in that** a monohydric alcohol is used as the water-miscible organic liquid.

7. A process according to one of Claims 1 to 5, **characterized in that** a mixture of monohydric alcohols is used as the water-miscible organic liquid.

8. A process according to one of Claims 1 to 5, **characterized in that** a polyhydric alcohol is used as the water-miscible organic liquid.

9. A process according to one of Claims 1 to 5, **characterized in that** a mixture of polyhydric alcohols is used as the water-miscible organic liquid.

10. A process according to one of the preceding Claims, **characterized in that** a mixture of monohydric or polyhydric alcohols is used as the water-miscible organic liquid.

## Revendications

1. Procédé destiné à éliminer l'eau et les liquides aqueux de la vase d'une cavité souterraine, en particulier d'une caverne, caractérisé en ce qu'il est ajouté à la vase un liquide organique miscible avec l'eau et en ce que le mélange ainsi formé est évacué de la cavité.

2. Procédé selon la revendication 1, caractérisé en ce que d'abord le liquide organique miscible avec l'eau est ajouté et ensuite le mélange obtenu est évacué.

3. Procédé selon la revendication 2, caractérisé en ce que l'addition et l'évacuation successive sont renouvelées plusieurs fois.

4. Procédé selon la revendication 1, caractérisé en ce que pendant l'addition du liquide organique miscible avec l'eau, le mélange obtenu est évacué aussi simultanément.

5. Procédé selon la revendication 1 et l'une des revendications 2 ou 4, caractérisé en ce que l'eau est éliminée du mélange évacué et en ce que la fraction de mélange restante est ajoutée à la vase ou au mélange restant encore dans la vase.

6. Procédé selon l'une des revendications précédentes, caractérisé en ce qu'on utilise comme liquide organique miscible avec l'eau un alcool monovalent.

7. Procédé selon l'une des revendications 1 à 5, caractérisé en ce qu'on utilise comme liquide organique miscible avec l'eau un mélange d'alcools monovalents.

8. Procédé selon l'une des revendications 1 à 5, caractérisé en ce qu'on utilise comme liquide organique miscible avec l'eau un alcool polyvalent.

9. Procédé selon l'une des revendications 1 à 5, caractérisé en ce qu'on utilise comme liquide organique miscible avec l'eau un mélange d'alcools polyvalents.

10. Procédé selon l'une des revendications précédentes, caractérisé en ce qu'on utilise comme liquide organique miscible avec l'eau un mélange d'alcools monovalents ou polyvalents.
